# EUROPEAN PATENT SPECIFICATION

(11) **EP 1 935 551 B1**
(45) Date of publication and mention of the grant of the patent: **29.06.2011**
(21) Application number: 06026222.7
(22) Date of filing: 18.12.2006
(51) Int. Cl.: B23K 20/06, B23K 101/18, B23K 101/00

(54) **Method of magnetic impulse welding of sheets, one of the sheets having at least one attachment region inclined at an angle to the sheet plane**
Verfahren zum Magnetimpulsschweißen von Blechen, mit einem dieser Bleche mit einem Verbindungsteil, der relativ zur Blechplane geneigt ist
Procédé de soudage par impulsions magnétiques de tôles, une de ces tôles ayant une zone de fixation inclinée vis-à-vis du plan de la tôle

(43) Date of publication of application: 25.06.2008
(73) Proprietor: GM Global Technology Operations, Inc., Detroit, MI 48265-3000 (US)
(72) Inventor: Olsson, Sven-Ove, 46195 Trollhättan (SE)
(74) Representative: Strauss, Peter

(56) References cited:
- EP-A- 1 516 691
- FR-A- 2 883 784
- US-A- 3 520 049
- US-A1- 2001 047 983
- US-A1- 2004 069 832
- US-A1- 2004 092 321
- US-A1- 2005 116 011
- US-A1- 2005 229 377

## Description

The invention relates to a method of magnetic impulse welding of sheets, in particular, metallic sheets according to the preamble of claim 1 (see, for example, US 3520049).

Some welding techniques involve the application of heat to localised areas of two metallic members which results in a coalescence of the two metallic members and a welded joint. Pressure and/or a further filler metal may additionally be used. There are, however, some drawbacks to the use of these welding techniques. The application of heat can cause undesirable distortions and weaknesses to be introduced into the metallic members. Additionally, the surface finish of the welded area is often undesirably rough. Furthermore, reliable welded joints between components of dissimilar metallic materials are difficult to produce.

In order to mitigate some of these drawbacks, it is known from US 6,234,375 to use magnetic impulse welding to join tubular members. While magnetic impulse welding may be used to join dissimilar materials such as steel and aluminium, the prior art magnetic impulse welding methods are inconvenient to use for joining metallic members in the form of sheets. The known methods and apparatus for magnetic impulse welding are, therefore, limited in the extent to which they can be used since complex structures, such as vehicle frames and vehicle body panels, often include components having a variety of forms, such as sheets, as well as tubular components.

US 2005/0229377 discloses apparatus and methods for applying electromagnetic force to flanging and hemming metal panels to form a hemmed panel assembly.

US 3,520,049 discloses a method of pressure welding based on the use of forces of interaction of magnetic fields. The parts to be welded are positioned in spaced relation at an angle therebetween. The method can be used for obtaining overlapping welded joints of thin wall parts having different thickness and made from different materials without melting, the resulting joints not requiring any further mechanical treatment.

US 2004/0092321 A1 discloses a method of attaching a balancing mass to a rotational member which has to be balanced and comprises a longitudinal axis X. The method uses magnetic pulse welding wherein the balancing mass, at a high speed, is radially moved towards the longitudinal axis of the rotational member and, when hitting the rotational member, becomes welded thereto.

US 2001/0047983 A1 discloses laser welding of two overlapped plate steel sheets. Prior to welding, slits are formed intermittently in the upper plated steel sheet.

FR 2 883 784 discloses a tool having a first part with a first electromagnetic coil and first abutment and a second part with a second abutment. The first electromagnetic coil is used for generating an electromagnetic flux which enables a first part made of paramagnetic material positioned on the first abutment to be pushed towards a second part positioned on the second abutment and attached thereto.

A method and apparatus for magnetic impulse welding more suitable for joining metallic sheets is, therefore, desirable.

This object is solved by the subject matter of the independent claim 1. Further advantageous developments are the subject matter of the dependent claims.

A method for magnetic impulse welding of sheets comprises providing a first metallic sheet and a second metallic sheet which are to be welded together, each sheet having a sheet plane. The first sheet comprises a plurality of attachment regions spaced at intervals in the region of the first sheet to be joined to the second sheet. Each attachment region is a plastically deformed depression in a surface of the first sheet and inclined at an angle to the sheet plane. The depressions each comprise a dimple or a groove. The first sheet is arranged on the second sheet so that the first sheet is in physical contact with the second sheet in regions outside of the attachment regions and so that each attachment region of the first sheet is positioned at a distance from the second sheet and provides a localised spacer between adjoining surfaces of the first sheet and the second sheet. A magnetic field pulse is applied so as to cause a force on one of the plurality of attachment regions in directions generally perpendicular to the first sheet plane and the second sheet plane so that said attachment region of the first sheet is driven against the second sheet with sufficient force to produce a localised cold-welded joint between the attachment region of the first sheet and the second sheet at the attachment region. Regions of the first sheet outside of said attachment region and the second sheet remain essentially stationary while said attachment region is moved by the force caused by the pulse of applied magnetic field. The magnetic impulse welding method is repeated at each attachment region to produce a plurality of localised cold-welded joints between the first sheet and the second sheet.

The first metallic sheet and the second metallic sheet have a general planar form. However, the form may deviate from a theoretical plane, particularly in regions outside of the region of the sheets which to be joined, such as an edge seam for example.

The sheet plane is defined as a plane parallel to the general upper surface of the sheet, at least in the region in which the joint is desired. The general upper surface being generally planar apart from, in the case of the first sheet, the at least one attachment region which is inclined at an angle to the sheet plane.

This context, inclined at an angle is used to define an angle which is greater than 0° and up to and including 90° from the sheet plane. It should be understood, that the attachment region may include portions inclined at a plurality of angles to the sheet plane and may include a portion which is generally parallel to the sheet plane.

At least one attachment region is positioned in at least one of the sheets to be joined in a region where a joint is desired. To form the cold welded joints between the attachment region of the first sheet and the second sheet, the first sheet is arranged on the second sheet. More particularly, a portion of the first sheet may overlap a portion of the second sheet to provide an overlapping joining region.

The first sheet is in physical contact with the second sheet in regions outside of the attachment region. In other words, only the attachment region of the first sheet is positioned at a distance from the second sheet to provide a localized spacer between adjoining surfaces of the first sheet and the second sheet. Only the attachment region is driven at high speed by the force caused by the magnetic field pulse against the second sheet to produce a local explosive or impact weld. Consequently, a localised cold welded joint or spot weld is formed between the first sheet and the second sheet at the attachment region.

This is in contrast to other magnetic impulse welding techniques where a first tubular member is positioned concentrically within a second tubular member and at a distance from the second tubular member. A force is applied symmetrically around the overlapping members to form a continuous ring shaped joint which extends over essentially all of the overlapping portions.

A method by which localized attachment regions are welded by the force provided by a magnetic impulse is simple to use since it is not necessary to space the whole of the first sheet and the whole of the second sheet at a distance from another and to move the whole of the first sheet against second sheet at high velocity by applying the pulse of magnetic field to produce a cold-welded joint.

Regions of the first sheet outside of the attachment region and the second sheet remain essentially stationary while the attachment region is moved by the force caused by the pulse of applied magnetic field.

The attachment region of the first sheet may be provided in a variety of forms. The attachment region is provided in the form of a plastically deformed depression or protrusion in a surface of the first sheet. A plurality of attachment regions are provided, typically spaced at intervals in the region to be joined. A cold welded joint is formed, by the magnetic impulse welding method described herein, between each of the plurality of attachment regions of the first sheet and the second sheet to provide a plurality of localised cold welded joints.

The plastically deformed depression comprises a dimple, which may have a generally hemispherical or frustoconical form or the depression may comprise a groove. Since the depression is formed by plastic deformation of the sheet, the depression may also be described as a protrusion in the opposing surface. The attachment area or attachment areas of the first sheet may be spaced at a distance of 2 mm to 3 mm from the second sheet when the two sheets are arranged together before the cold welded joint is formed. The plastically deformed depression may have a diameter of 2 mm to 15 mm and a depth of 0.5 mm to 10 mm or a length of 10 mm to 200 mm, a width of 2 mm to 20 mm and a depth of 0.5 mm to 10 mm. Each sheet to be joined may have a thickness of 0.5 mm to 10 mm, for example.

The dimensions of the attachment areas may be selected depending on the lateral extent of the cold welded joint which is desired. The spacer distance provided by the attachment region may be selected to as to provide a desired impact speed between the attachment region of the first sheet and the second sheet.

In an embodiment, the attachment region extends to an edge of the first sheet. An example, a groove may extend from an edge of the first sheet inwardly. This arrangement has the advantage that as the plastically deformed attachment region is driven against the second sheet by the force caused by the magnetic field pulse, air and any other particles present in the gap between the attachment region of the first sheet and the second sheet may escape from the open end of the attachment region.

The force caused by the magnetic field pulse may be sufficient to drive the attachment region of the first sheet against the second sheet at a velocity of up to 500 m/s. The velocity is selected so as to produce a reliable cold welded joint between the attachment region of the first sheet and the second sheet. The velocity required to produce a reliable cold welded joint depends on the material of the sheets which are to be joined and is selected accordingly.

The magnetic field may be applied from only one side of the overlapping metallic sheets. Alternatively, the magnetic field may be applied form two opposing sides of the two metallic sheets to be joined.

The magnetic field may be applied in directions generally parallel to the first sheet plane so as to cause a force in directions generally perpendicular to the first sheet plane in the region of the attachment region. The magnetic field may be provided by an electromagnet which is energised by a current pulse of up to 500 kA or up to 100 kA, for example. The current pulse may be provided by switching open an energised capacitor bank and may have a pulse length of 20 to 100 µs, for example.

The method may be used to join sheets of any metal or alloy. The sheets are therefore, metallic. A high electrical conductivity is advantageous in that larger currents are induced in the sheet which results in a greater force and a more efficient joining welding process.

In an embodiment, the first sheet and second sheet may comprise metals or alloys of the metals chosen from the group consisting of steel, aluminium and magnesium, in particular aluminium to aluminium and steel to steel. The first sheet and the second sheet may comprise the same metal or alloys or may comprise different metals or alloys of metals chosen from these groups. More particularly, a steel sheet may be joined to an aluminium sheet by the localized magnetic impulse welding method according to one of the embodiments described herein.

The method may be conveniently used to join metallic components in the form of sheets which are components of a vehicle body panel assembly, a vehicle chassis, a vehicle frame assembly or a vehicle exhaust system. These components are provided with at least one attachment region positioned locally where a localized joint is desired. The method may be used to join steel and aluminium components of car bodies.

In this context first metallic sheet and second metallic sheet may refer to the form of the component in a region or seam which is to be joined. The components may have a three-dimensional form, formed by deforming a sheet or panel which has a general sheet or panel plane, which extends in directions perpendicular to the general sheet plane, for example, a vehicle body panel. The regions of the first and second sheet which are to be joined, for example an edge seam, may be generally planar.

Embodiments of the invention will now be described with reference to the following drawings.
- Figure 1: illustrates an arrangement for magnetic impulse welding of sheets, not covered by the present invention, but useful to understand it,
- Figure 2: illustrates the arrangement after the production of the cold welded joint not covered by the present invention, but useful to understand it,
- Figure 3: illustrates an arrangement for magnetic impulse welding of sheets according not covered by the present invention,
- Figure 4: illustrates the arrangement after the production of the cold welded joint not covered by the present invention, and
- Figure 5: illustrates apparatus for magnetic impulse welding of sheets.

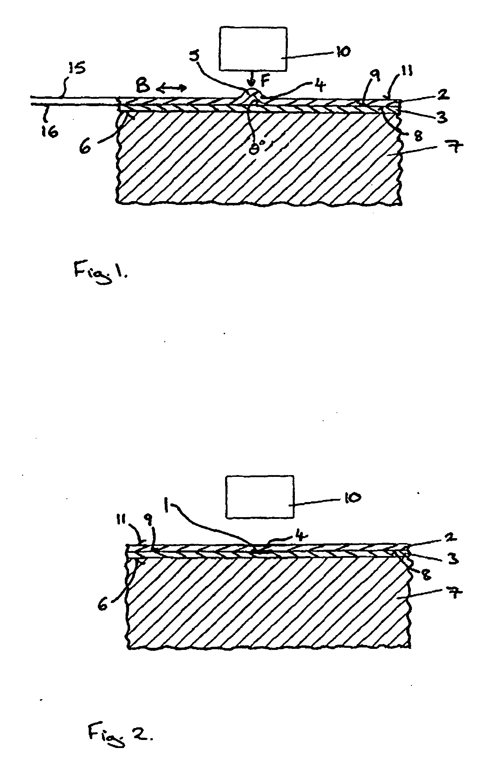

Figures 1 and 2 illustrates the production of a localised cold welded joint 1 between a first metal sheet 2 and a second metallic sheet 3 by magnetic impulse welding according to a first example. The first metallic sheet 2 is an aluminium sheet which comprises a plurality of attachment regions 4, of which one is illustrated, spaced at intervals in an edge region. Each attachment region 4 has the form of a hemispherical dimple 5 having a diameter of 5 mm and a depth of 2 mm which has been produced by plastic deformation of the first sheet 2. The dimple 5 may be produced by pressing the lower surface 9 to form a depression in the lower surface 9 and corresponding protrusion in the upper surface 11 of the first sheet 2. The second sheet 3 is a steel sheet. The aluminium sheet 2 and steel sheet 3 are components of a vehicle chassis.

The second steel sheet 3 is placed on a support surface 6 of the support table 7. The first aluminium sheet 2 is placed on the upper surface 8 of the second sheet 3 such that the lower surface 9 of the first sheet 2 is in physical contact with the upper surface 8 of the second sheet 3 in regions outside of the dimple or attachment region 4. The first metallic sheet 2 and second metallic sheet 3 each have a sheet plane 15, 16 which is generally parallel with the upper surface 6 of the support table 7. The dimple 5 provides a localized region of the first sheet 2 which is spaced at a distance from the upper surface 8 of the second sheet 3. The dimple 5 provides an attachment region 4 with at least portions inclined at an angle, θ, to the first sheet plane 15 as well as the second sheet plane 16.

A means 10 for applying a magnetic field pulse is positioned adjacent the first metallic sheet 2, more particularly, adjacent the upper surface 11 of the protruding surface of the attachment region 4 of the first metallic sheet 2.

In order to increase the force produced by the interaction of the applied magnetic field and the magnetic field induced in the first sheet 2 and second sheet 3, the sheet with the highest electrical conductivity is positioned directly adjacent to the magnet 10. Therefore, in this embodiment, the steel sheet 3 is placed on the support table 7 and the aluminium sheet 2 is placed on the steel sheet 3 so that it is directly adjacent to the magnet 10.

The means 10 for generating magnetic field pulse is provided in the form of an electromagnet which further comprises a power supply comprising a bank of capacitors, a high-speed switching system as well as the electrically conductive coil which are not illustrated in the drawings. The magnetic field pulse generating means is adapted to provide a magnetic field pulse in directions generally parallel to the first sheet plane 15 of the first metallic sheet 2 and the second sheet plane 16 of the second metallic sheet 3. The coil may be provided in the form of an E-shaped flat coil.

To produce a cold welded joint between the attachment region 4 of the first metallic sheet 2 and the second metallic sheet 3, the bank of capacitors is charged, the high-speed switch is activated and a current pulse of is applied to the coil. As an example, the current pulse may be 100kA for a time of 50 µs. A high-density magnetic flux is generated by the coil, indicated in the drawings by B, in the plane of the first sheet 2 and second sheet 3. As a result, eddy currents are created in the first sheet 2 and, to a lesser extent, in the second sheet 3 since the first sheet 2 is shielding the second sheet 3. These induced eddy currents induce a magnetic field which interacts with the magnetic field of the coil resulting in a force, indicated in the drawings by F, to be created in directions generally perpendicular to the sheet plane and upper surface 11 of the first sheet 2 in the attachment region 4 of the first sheet 2. This force F drives the attachment region 4 of the first sheet 2 against the upper surface 8 of the second sheet 3 at a speed of up to 500 m/s and an explosive or impact weld is produced at the interface between the lower surface 9 of the first sheet at attachment region 4 and the upper surface 8 second sheet 3.A localised or spot cold welded joint 1 is produced between the first sheet 2 and the second sheet 3 at the attachment region 4 which is illustrated in figure 2 as a black rectangle.

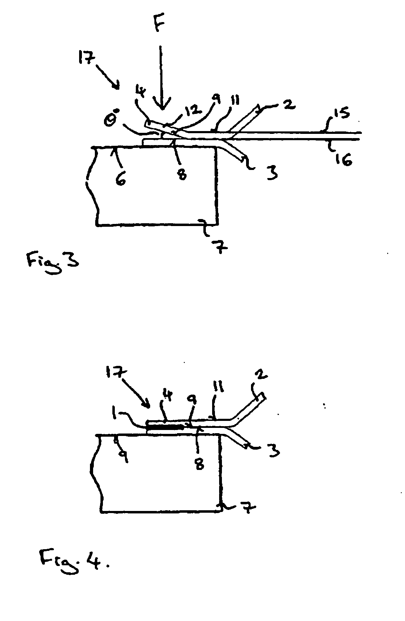

Figures 3 and 4 illustrate the production of a cold welded joint between a first aluminium sheet 2 and a second steel sheet 3 not covered by the invention. The same reference numbers are used to indicate the same components or components have a similar function throughout the description.

The attachment region 4 is provided in the form of a bent edge region 12 of the first sheet 2. The edge region 12 of the first sheet 2 is, therefore, positioned at inclined angle, θ, to the first sheet plane 15 and the second sheet plane 16. The inclined edge region 12 has a length of 30 mm and the distal end is positioned approximately 3 mm above the upper surface 8 of the second sheet 3. As is illustrated in' Figures 3 and 4, the form of the first sheet 2 and second sheet 3 may deviate from the sheet plane 15, 16 in regions outside of the joint region 17. In the joint region 17, the first sheet plane 15 and second sheet plane 16 are positioned parallel to each other and the lower surface 9 of the first sheet is in physical contact with the upper surface 8 of the second sheet apart from in the attachment region 4.

Similarly to the first embodiment, a magnetic field pulse is applied which produces a force F in a directions generally perpendicular to the support surface 6 of the support table 7 on the first sheet 2 driving the attachment region 4 against the second sheet 3 at a sufficient velocity to produce a cold weld 1 between the first sheet 2 and the second sheet 3 in the region of the attachment region 4. The distal end of the limb 12 providing the attachment region 4 is open at the edge of the first sheet 2 so that air and other particles present in the gap between the first sheet 2 and the second sheet 3 in the attachment region 4 may escape from the interface during the production of the cold welded region.

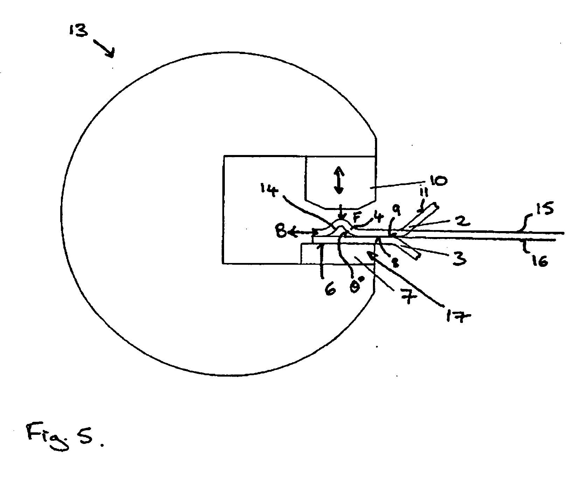

Figure 5 illustrates a side view of apparatus (not being part of the present invention) 13 for producing a cold welded joint between two sheets 2, 3 by magnetic impulse welding. The apparatus 13 has a general C-shape and comprises a support table 7 and electromagnet 10 positioned adjacent the support surface 6 of the support table 7. The first metallic sheet 2 and second metallic sheet 3 are supported on the support table 7 during the welding process. The second sheet 3, which is generally planar, is positioned on the upper surface 6 of the support table 7 and the first sheet 2 is positioned on the second sheet 3 so that an attachment region 4 of first sheet is spaced at a distance from the upper surface 8 of second sheet 3. In this embodiment, a plurality of attachment regions 4, of which one is illustrated, are provided in the form of a groove 14 which extends to an edge of the first sheet 2 and is, therefore, open at this end. Each groove has a length of 50 mm, depth of 2.5 mm and a width of 4 mm for example.

The electromagnet 10 is movable in directions generally perpendicular to the upper surface 6 of the support table 7 and relative to the upper surface 6 of the support table 7 as indicated by the arrows. The electromagnet 10 is adapted to produce a magnetic field, B, in directions generally parallel to be upper surface 6 of the support table 7 and generally parallel to the sheet plane of the first metallic sheet 2 and of the second metallic sheet 3. The pulse of magnetic field induces eddy currents in the first metallic sheet 2 and second metallic sheet 3 producing a magnetic field which interacts with the applied magnetic field so as to create a force, F, in a directions generally perpendicular to the support surface 6 and generally perpendicular to be first sheet plane and second sheet plane. This force causes the attachment region 4 to be driven at high velocity against the upper surface 8 of the second sheet 3 to create a localised cold-welded joint at the attachment region 4 between the lower surface 9 of the attachment region 4 of the first sheet 2 and the upper surface 8 of the second metallic sheet 3.

The electromagnet 10 may be moved upwards away from the support surface 6 in order to positioned the first sheet 2 and second sheet 3 conveniently on the support table 7. The electromagnet 10 may then be lowered in a direction towards the support surface of the support table 7 and be positioned at a short distance adjacent the first metallic sheet 2, for example 1 mm, when the magnetic field pulse is generated. This enables a greater magnetic field to be applied for a given current to the first metallic sheet 2 and second metallic sheet 3 using a lower current due to the close proximity of the electromagnet 10 to the first sheet 2 and second sheet 3 which are to be welded together. A larger magnetic field results in a larger force and higher impact velocity. The electromagnet is advantageously positioned as close as possible to the upper surface 11 of the first sheet 2 so as to subject the first sheet 2 to the highest possible applied magnetic field pulse.

The first metallic sheet 2 and second metallic sheet 3 may be joint together by a number of localised or spot welds fabricated by a magnetic impulse welding method according to one of the embodiments described herein. The first sheet 2 is provided with a plurality of attachment regions 4, according to the present invention, which are positioned at intervals along a region, such as a seam, which is to be joined in an overlapping manner to the second metallic sheet 3. A magnetic field pulse is applied according to the present invention to each of the attachment regions 4 in turn so as to drive the attachment region 4 against the second sheet 3 thus creating a plurality of localised cold welded joints 1 between the first metallic sheet 2 and second metallic sheet 3.

The apparatus 13 may be stationary or may move, for example by the use of a robot or robot carried welding fixture. A stationary or mechanically indexed tool may perform the welding of the sheets that are located in a stationary fixture. Alternatively, a stationary tool performs welding of the sheets which are located in a robot carried fixture. In yet another alternative, a robot carried C-shaped welding unit is positioned to weld sheets located in a stationary fixture. In each case, the current pulse is released, generating a magnetic field in the coil, the local depression is flattened and driven against the second sheet. The material of the first sheet locally hits the second sheet with high energy creating a local weld. The tool is then moved to another attachment region position and the welding process repeated.

In further embodiments not illustrated in the figures, the second metallic sheet 3 is also provided with at least one attachment region according to one of the embodiments described herein. The attachment region of the second sheet 2 may be positioned so as to align with an attachment region of the first sheet. This may be used to create a larger local gap or space and a higher impact velocity.

The surface finish of the joint fabricated by the method of the invention is very high and may be superior to that achieved by spot welding since deformation caused by high temperatures and the use of additional filler materials is avoided. Additionally, a high surface finish can be provided for a joint between steel and aluminium which is considerably better than the surface finish provided by the clinching and self piercing rivets frequently used to join steel components to aluminium components.

The method is also fast and convenient as a step in which the sheets to be joined are spaced from one another is avoided. The method may be used for volume manufacture, such as the volume manufacture of car bodies. Since mixed materials, in particular, steel and aluminium, may be conveniently joined, the method is also suitable for the volume manufacture of mixed car bodies in which components traditionally made of steel are replaced by aluminium in order to save weight and improve fuel efficiency.

### Reference numbers

- 1: welded joint
- 2: first sheet
- 3: second sheet
- 4: attachment region
- 5: dimple
- 6: support surface
- 7: support table
- 8: upper surface of second sheet
- 9: lower surface of first sheet
- 10: electromagnet
- 11: upper surface of first sheet
- 12: bent edge
- 13: apparatus
- 14: groove
- 15: first sheet plane
- 16: second sheet plane
- 17: j oint region

## Claims

1. Method of magnetic impulse welding of sheets (2, 3), comprising:
- providing a first metallic sheet (2) and a second metallic sheet (3) which are to be welded together, each sheet having a sheet plane (15),
**characterized in that**
the first sheet (2) comprises a plurality of attachment regions (4) spaced at intervals in the region of the first sheet (2) to be joined to the second sheet (3), each attachment region (4) being a plastically deformed depression (5, 14) in a surface (9) of the first sheet (2) and inclined at an angle to the sheet plane (15), the depressions (5, 14) each comprising a dimple (5) or a groove (14),
- arranging the first sheet (2) on the second sheet (3) so that the first sheet is in physical contact with the second sheet in regions outside of the attachment regions and so that each attachment region (4) of the first sheet (2) is positioned at a distance from the second sheet (3) and provides a localised spacer between adjoining surfaces of the first sheet (2) and the second sheet (3),
- applying a magnetic field pulse so as to cause a force on one of the plurality of attachment regions (4) in directions generally perpendicular to the first sheet plane (15) and the second sheet plane (16) so that said attachment region (4) of the first sheet (2) is driven against the second sheet (3) with sufficient force to produce a localised cold-welded joint (1) between the attachment region (4) of the first sheet (2) and the second sheet (3) at the attachment region (4), wherein regions of the first sheet (2) outside of said attachment region (4) and the second sheet (3) remain essentially stationary while said attachment region (4) is moved by the force caused by the pulse of applied magnetic field,
- repeating the magnetic impulse welding method at each attachment region (4) to produce a plurality of localised cold-welded joints (1) between the first sheet (2) and the second sheet (3).

2. Method according to claim 1, **characterized in that** the second sheet (3) comprises at least one attachment region (4) inclined at an angle to the second sheet plane (16).

3. Method according to claim 1 or claim 2, **characterized in that** the attachment area (4) of the first sheet (2) is spaced at a distance of 0.5 mm to 10 mm from the second sheet (3).

4. Method according to one of the preceding claims, **characterized in that** the depressions comprise a dimple having a generally hemispherical or frustoconical form.

5. Method according to one of the preceding claims, **characterized in that** the depression (5) has a diameter of 2 mm to 15 mm and a depth of 0.5 mm to 10 mm.

6. Method according to one of claims 1 to 4, **characterized in that** the depression (14) has a length of 10 mm to 200 mm, a width of 2 mm to 20 mm and a depth of 0.5 mm to 10 mm.

7. Method according to one of the preceding claims, **characterized in that** the attachment region (12, 14) extends to an edge of the first sheet (2).

8. Method according to one of the preceding claims, **characterized in that** the force is sufficient to drive the attachment region (4) of the first sheet (2) against the second sheet (3) at a speed of up to 500 m/s.

9. Method according to one of the preceding claims, **characterized in that** the magnetic field is applied from only one side of the first sheet (2).

10. Method according to one of claims 1 to 8, **characterized in that** the magnetic field is applied from two opposing sides of the first sheet (2).

11. Method according to one of the preceding claims, **characterized in that**, the magnetic field is applied in directions generally parallel to the first sheet plane (15).

12. Method according to one of the preceding claims, **characterized in that** the magnetic field is provided by an electromagnet (10), the electromagnet being energized by a current pulse of up to 500 kA.

13. Method according to one of the preceding claims, **characterized in that** the first sheet (2) and the second sheet (3) comprise metals or alloys of metals chosen from the group consisting of steel, aluminium and magnesium.

14. Method according to one of the preceding claims 1 to 13, **characterized in that** the first sheet (2) and the second sheet (3) comprise different metals or alloys of metals chosen from the groups consisting of steel, aluminium and magnesium.

15. Method according to one of the preceding claims, **characterized in that** the first sheet (2) and the second sheet (3) are components of a vehicle body panel assembly, a vehicle chassis, a vehicle frame assembly or a vehicle exhaust system.

16. Use of the method of one of claims 1 to 15 to manufacture a vehicle body panel assembly, a vehicle chassis, a vehicle frame assembly or a vehicle exhaust system.

## Patentansprüche

1. Verfahren zum Magnetimpulsschweißen von Blechen (2, 3), das Folgendes umfasst:
- Bereitstellen eines ersten Metallblechs (2) und eines zweiten Metallblechs (3), die zusammengeschweißt werden sollen, wobei jedes der Bleche eine Blechebene (15) aufweist,
**dadurch gekennzeichnet, dass**
das erste Blech (2) eine Mehrzahl von Befestigungsbereichen (4) aufweist, die in Intervallen im Bereich des ersten Blechs (2) beabstandet sind, der mit dem zweiten Blech (3) verbunden werden soll, wobei jeder Befestigungsbereich (4) eine plastisch verformte Vertiefung (5, 14) in einer Oberfläche (9) des ersten Blechs (2) ist und in einem Winkel zu der Blechebene (15) geneigt ist, wobei die Vertiefungen (5, 14) jeweils ein Grübchen (5) oder eine Nut (14) umfassen,
- Anordnen des ersten Blechs (2) auf dem zweiten Blech (3), so dass das erste Blech in Bereichen außerhalb der Befestigungsbereiche in physischem Kontakt mit dem zweiten Blech ist und dass jeder Befestigungsbereich (4) des ersten Blechs (2) in einem Abstand vom zweiten Blech (3) angeordnet ist und einen lokalisierten Abstandhalter zwischen benachbarten Oberflächen des ersten Blechs (2) und des zweiten Blechs (3) bereitstellt,
- Anlegen eines Magnetfeldimpulses, um eine Kraft auf eine der Mehrzahl von Befestigungsbereichen (4) in Richtungen auszuüben, die im allgemeinen senkrecht zur ersten Blechebene (15) und zur zweiten Blechebene (16) stehen, so dass der Befestigungsbereich (4) des ersten Blechs (2) mit ausreichender Kraft gegen das zweite Blech (3) getrieben wird, um eine lokalisierte kaltgeschweißte Verbindung (1) zwischen dem Befestigungsbereich (4) des ersten Blechs (2) und dem zweiten Blech (3) im Befestigungsbereich (4) herzustellen, wobei Bereiche des ersten Blechs (2) außerhalb des Befestigungsbereichs (4) und das zweite Blech (3) im wesentlichen stationär bleiben, während der Befestigungsbereich (4) von der durch den Impuls des angelegten Magnetfelds erzeugten Kraft bewegt wird,
- Wiederholen des Magnetimpulsschweißverfahrens an jedem Befestigungsbereich (4), um eine Mehrzahl lokalisierter kaltgeschweißter Verbindungen (1) zwischen dem ersten Blech (2) und dem zweiten Blech (3) herzustellen.

2. Verfahren gemäß Anspruch 1, **dadurch gekennzeichnet, dass** das zweite Blech (3) mindestens einen Befestigungsbereich (4) umfasst, der in einem Winkel zur zweiten Blechebene (16) geneigt ist.

3. Verfahren gemäß Anspruch 1 oder 2, **dadurch gekennzeichnet, dass** die Befestigungsfläche (4) des ersten Blechs (2) in einem Abstand von 0,5 mm bis 10 mm vom zweiten Blech (3) entfernt ist.

4. Verfahren gemäß einem der vorangehenden Ansprüche, **dadurch gekennzeichnet, dass** die Vertiefungen ein Grübchen umfassen, das im allgemeinen halbkugel- oder kegelstumpfförmig ist.

5. Verfahren gemäß einem der vorangehenden Ansprüche, **dadurch gekennzeichnet, dass** die Vertiefung (5) einen Durchmesser von 2 mm bis 15 mm und eine Tiefe von 0,5 mm bis 10 mm aufweist.

6. Verfahren gemäß einem der Ansprüche 1 bis 4, **dadurch gekennzeichnet, dass** die Vertiefung (14) eine Länge von 10 mm bis 200 mm, eine Breite von 2 mm bis 20 mm und eine Tiefe von 0,5 mm bis 10 mm aufweist.

7. Verfahren gemäß einem der vorangehenden Ansprüche, **dadurch gekennzeichnet, dass** sich der Befestigungsbereich (12, 14) bis zu einer Kante des ersten Blechs (2) erstreckt.

8. Verfahren gemäß einem der vorangehenden Ansprüche, **dadurch gekennzeichnet, dass** die Kraft ausreicht, um den Befestigungsbereich (4) des ersten Blechs (2) mit einer Geschwindigkeit bis zu 500 m/s gegen das zweite Blech (3) zu treiben.

9. Verfahren gemäß einem der vorangehenden Ansprüche, **dadurch gekennzeichnet, dass** das Magnetfeld nur von einer Seite des ersten Blechs (2) angelegt wird.

10. Verfahren gemäß einem der Ansprüche 1 bis 8, **dadurch gekennzeichnet, dass** das Magnetfeld von zwei einander gegenüber liegenden Seiten des ersten Blechs (2) angelegt wird.

11. Verfahren gemäß einem der vorangehenden Ansprüche, **dadurch gekennzeichnet, dass** das Magnetfeld in Richtungen angelegt wird, die im allgemeinen parallel zu der ersten Blechebene (15) sind.

12. Verfahren gemäß einem der vorangehenden Ansprüche, **dadurch gekennzeichnet, dass** das Magnetfeld durch einen Elektromagneten (10) bereitgestellt wird, wobei der Elektromagnet durch einen Stromimpuls bis zu 500 kA gespeist wird.

13. Verfahren gemäß einem der vorangehenden Ansprüche, **dadurch gekennzeichnet, dass** das erste Blech (2) und das zweite Blech (3) Metalle oder Metalllegierungen aufweisen, die aus der Gruppe bestehend aus Stahl, Aluminium und Magnesium ausgewählt sind.

14. Verfahren gemäß einem der vorangehenden Ansprüche 1 bis 13, **dadurch gekennzeichnet, dass** das erste Blech (2) und das zweite Blech (3) unterschiedliche Metalle oder Metalllegierungen aufweisen, die aus der Gruppe bestehend aus Stahl, Aluminium und Magnesium ausgewählt sind.

15. Verfahren gemäß einem der vorangehenden Ansprüche, **dadurch gekennzeichnet, dass** das erste Blech (2) und das zweite Blech (3) Komponenten einer Fahrzeugkarosserieanordnung, eines Fahrzeugfahrwerks, einer Fahrzeugrahmenanordnung oder eines Fahrzeugabgassystems sind.

16. Nutzung des Verfahrens eines der Ansprüche 1 bis 15 zur Herstellung einer Fahrzeugkarosserieanordnung, eines Fahrzeugfahrwerks, einer Fahrzeugrahmenanordnung oder eines Fahrzeugabgassystems.

## Revendications

1. Procédé de soudage par impulsions magnétiques de tôles (2, 3), comprenant :
- l'apport d'une première tôle métallique (2) et une deuxième tôle métallique (3) qui doivent être soudées ensemble, chaque tôle ayant un plan de la tôle (15),
**caractérisé en ce que**
la première tôle (2) comprend une pluralité de zones de fixation (4) espacées par intervalle dans la zone de la première tôle (2) à assembler à la deuxième tôle (3), chaque zone de fixation (4) étant une dépression plastiquement déformée (5, 14) sur une surface (9) de la première tôle (2) et incliné vis-à-vis du plan de la tôle (15), les dépressions (5, 14) comprenant chacune une fossette (5) ou une rainure (14),
- la disposition de la première tôle (2) sur la deuxième tôle (3) de sorte que la première tôle soit en contact physique avec la deuxième tôle dans des zones à l'extérieur des zones de fixation et de sorte que chaque zone de fixation (4) de la première tôle (2) soit placée à une distance de la deuxième tôle (3) et fournisse une entretoise localisée entre les surfaces adjacentes de la première tôle (2) et de la deuxième tôle (3),
- l'application d'une impulsion de champ magnétique afin de causer une force sur une des pluralités de zones de fixation (4) dans des directions généralement perpendiculaires au plan de la première tôle (15) et au plan de la deuxième tôle (16) de sorte que ladite zone de fixation (4) de la première tôle (2) soit entraînée contre la deuxième tôle (3) avec suffisamment de force pour produire un joint soudé à froid (1) localisé entre la zone de fixation (4) de la première tôle (2) et de la deuxième tôle (3) à la zone de fixation (4), où les zones de la première tôle (2) à l'extérieur de ladite zone de fixation (4) et la deuxième tôle (3) restent essentiellement stationnaires tandis que ladite zone de fixation (4) est déplacée par la force causée par l'impulsion du champ magnétique appliqué,
- la répétition du procédé de soudage par impulsions magnétiques à chaque zone de fixation (4) pour produire une pluralité de joints soudés à froid (1) localisés entre la première tôle (2) et la deuxième tôle (3).

2. Procédé selon la revendication 1, **caractérisé en ce que** la deuxième tôle (3) comprend au moins une zone de fixation (4) inclinée vis-à-vis du plan de la deuxième tôle (16).

3. Procédé selon la revendication 1 ou la revendication 2, **caractérisé en ce que** la zone de fixation (4) de la première tôle (2) est espacée à une distance de 0,5 mm à 10 mm de la deuxième tôle (3).

4. Procédé selon l'une des revendications précédentes, **caractérisé en ce que** les dépressions comprennent une fossette ayant une forme généralement hémisphérique ou frustoconique.

5. Procédé selon l'une des revendications précédentes, **caractérisé en ce que** la dépression (5) a un diamètre de 2 mm à 15 mm et une profondeur de 0,5 mm à 10 mm.

6. Procédé selon l'une des revendications 1 à 4, **caractérisé en ce que** la dépression (14) a une longueur de 10 mm à 200 mm, une largeur de 2 mm à 20 mm et une profondeur de 0,5 mm à 10 mm.

7. Procédé selon l'une des revendications précédentes, **caractérisé en ce que** la zone de fixation (12, 14) s'étend jusqu'à un bord de la première tôle (2).

8. Procédé selon l'une des revendications précédentes, **caractérisé en ce que** la force est suffisante pour entraîner la zone de fixation (4) de la première tôle (2) contre la deuxième tôle (3) à une vitesse allant jusqu'à 500 m/s.

9. Procédé selon l'une des revendications précédentes, **caractérisé en ce que** le champ magnétique est appliqué à partir uniquement d'un côté de la première tôle (2).

10. Procédé selon l'une des revendications 1 à 8, **caractérisé en ce que** le champ magnétique est appliqué à partir de deux côtés opposés de la première tôle (2).

11. Procédé selon l'une des revendications précédentes, **caractérisé en ce que** le champ magnétique est appliqué dans des directions généralement parallèles au plan de la première tôle (15).

12. Procédé selon l'une des revendications précédentes, **caractérisé en ce que** le champ magnétique est fourni par un électroaimant (10), l'électroaimant étant alimenté par une impulsion de courant allant jusqu'à 500 kA.

13. Procédé selon l'une des revendications précédente, **caractérisé en ce que** la première tôle (2) et la deuxième tôle (3) comprennent des métaux ou des alliages de métaux choisis à partir du groupe se composant d'acier, d'aluminium et de magnésium.

14. Procédé selon l'une des revendications 1 à 13 précédentes, **caractérisé en ce que** la première tôle (2) et la deuxième tôle (3) comprennent différents métaux ou alliages de métaux choisis à partir des groupes se composant d'acier, d'aluminium et de magnésium.

15. Procédé selon l'une des revendications précédentes, **caractérisé en ce que** la première tôle (2) et la deuxième tôle (3) sont des composants d'assemblage de tôle de carrosserie d'un véhicule, un châssis de véhicule, un assemblage de cadre de véhicule ou un système d'échappement de véhicule.

16. Utilisation du procédé de l'une des revendications 1 à 15 pour fabriquer un assemblage de tôle de carrosserie d'un véhicule, un châssis de véhicule, un assemblage de cadre de véhicule ou un système d'échappement de véhicule.
